# EUROPÄISCHE PATENTSCHRIFT

(11) **EP 0 536 648 B1**
(45) Veröffentlichungstag und Bekanntmachung des Hinweises auf die Patenterteilung: **28.02.1996**
(21) Anmeldenummer: 92116866.2
(22) Anmeldetag: 02.10.1992
(51) Int. Cl.: B05B 15/04, B05B 15/12, B01D 61/14, B05C 11/10

(54) **Verfahren zur Rückgewinnung des Oversprays von wässrigen Überzugsmitteln beim Spritzauftrag in Spritzkabinen**
Process for the recovery of overspray from water-coatings during spraycoating in spray booths
Procédé pour récupérer l'excédent d'une composition de revêtement aqueuse lors de l'application par pistolet dans des cabines de peinture

(30) Priorität: 05.10.1991 DE 4133130
(43) Veröffentlichungstag der Anmeldung: 14.04.1993
(73) Patentinhaber: Herberts Gesellschaft mit beschränkter Haftung, D-42285 Wuppertal (DE)
(72) Erfinder: Saatweber, Dietrich, Dr., W-5600 Wuppertal 2 (DE); Krumm, Waltraud, W-5830 Schwelm (DE); Richter, Bernhard, W-5600 Wuppertal 1 (DE); Holfter, Dirk, W-5800 Hagen 1 (DE)
(74) Vertreter: Türk, Gille, Hrabal, Leifert

(56) Entgegenhaltungen:
- EP-A- 0 137 877
- WO-A-91/09666
- DE-A- 3 227 227
- DE-A- 3 428 300
- DE-C- 3 332 457

## Beschreibung

Die Erfindung betrifft ein Verfahren zur Rückgewinnung des Oversprays von wäßrigen Überzugsmitteln beim Spritzauftrag in Spritzkabinen, bei dem das Overspray in das in der Spritzkabine verwendete wäßrige Überzugsmittel rezyklisiert werden kann.

Die Substitution von Lacken, die mit organischen Lösemitteln verdünnt werden, durch wasserverdünnbare Systeme, wird aus den bekannten Gründen der Umweltschonung immer wichtiger. Durch den Einsatz wasserverdünnbarer Systeme wird die Luft Weniger oder gar nicht mehr durch Lösemittelemissionen verunreinigt. Ein genereller Schwachpunkt bei der Verarbeitung von Überzugsmitteln, wie wasserverdünnbaren Lacken, durch Spritzapplikation sind jedoch Probleme, die sich bei der Entsorgung des Oversprays (Lacknebel) ergeben; diese Probleme treten insbesondere bei großformatigen Serienlackierungen, wie in der Autoindustrie, auf.

Es ist bekannt, die Abluft von Spritzkabinen zur Entsorgung von Overspray durch Auswaschen mit Wasser zu reinigen. Beispielsweise wird in der DE-A-29 45 523 ein Verfahren beschrieben, bei dem das Overspray von konventionellen lösemittelverdünnbaren Lacken mit Wasser ausgewaschen wird, worauf das Waschwasser einer Ultrafiltration unterzogen wird.

In der DE-A-32 27 227 wird ein ähnliches System zur Entsorgung des beim Lackieren mit Wasserlacken anfallenden Oversprays beschrieben. Das Overspray wird an mit Wasser berieselten Wandungen der Spritzkabine absorbiert und das im Kreislauf geführte Berieselungswasser wird über ein Ultrafilter aufbereitet. Es hat sich jedoch gezeigt, daß das im Berieselungswasser aufgefangene Overspray nicht mehr zur weiteren Verwendung in Beschichtungsmitteln brauchbar ist, so daß es entsorgt werden muß. Es wird zwar aus der Abwasserreinigung und insbesondere bei der Entfernung von unerwünschten niedrigmolekularen Stoffen bei Elektrotauchlackierverfahren die Ultrafiltration angewendet und dadurch eine Verbesserung des Nutzungsgrades durch Recycling erzielt (DE-C-21 58 668, DE-B-22 29 677, EP-A-0 127 685, EP-A-0 137 877, US-A-3,663,405 und US-A-3,663,406), jedoch ergeben sich bei der Anwendung der Ultrafiltration für das Recycling von Overspray Probleme. Während nämlich die Ultrafiltration von Elektrotauchlacken die Rückführung des Permeats und des Retentats in das Badmaterial ermöglichte, ergeben sich für das Recycling von Overspray aus Wasserlacken durch die unterschiedliche Applikationsart (Spritzen statt Elektrotauchen) und die dadurch bedingten höheren Viskositätsunterschiede Stabilitätsprobleme, wie die Gefahr der Koagulation, Sedimentation, Phasentrennung und Bildung von Ausfällungen. In der DE-A-34 28 300 wird zur Vermeidung der beim Verfahren der DE-A-32 27 227 auftretenden Stabilitätsprobleme empfohlen, die Berieselung der Spritzkabine mit entsalztem Wasser durchzuführen. Es hat sich jedoch gezeigt, daß auch der Einsatz von entsalztem Wasser als Berieselungsflüssigkeit nicht dazu geeignet ist, die Stabilitätsprobleme des absorbierten Oversprays derart auszuräumen, daß eine Eignung zur Wiederverwendung im Lackmaterial erzielt wird. In der WO 91/09666 wird versucht, die gemäß dem Verfahren der DE-A-32 27 227 auftretenden Stabilitätsprobleme dadurch zu lösen, daß die Berieselung der Spritzkabine mit Wasser erfolgt, dem ein Mittel zur Verhinderung der Koaleszenz beigegeben wird. Hierbei handelt es sich um Amine. Hierdurch werden einerseits umweltbelastende Stoffe zugesetzt und andererseits wird die Lackzusammensetzung durch Zusatz von Chemikalien verändert.

Die Aufkonzentration von in Wasser aufgenommenem Overspray durch Ultrafiltration von niedrigen auf höhere Konzentrationen führt darüber hinaus zu starken Veränderungen der wäßrigen Überzugsmittel, weil durch die Ultrafiltration bevorzugt wasserlösliche und niedermolekulare Bestandteile wie Löse- und Neutralisationsmittel entzogen werden, die zur Stabilisierung der wäßrigen Lackdispersionen und zu ihren lacktechnischen Eigenschaften wesentlich beitragen.

In der DE-A-33 32 457 wird die Rückgewinnung des Oversprays von wäßrigen Überzugsmitteln beim Spritzauftrag in Spritzkabinen beschrieben, bei dem das Overspray in einer wäßrigen Auswaschflüssigkeit aufgefangen wird, die kontinuierlich in einem Kreislauf in die Spritzkabine zurückgeführt wird, wobei ein Teil der Overspray enthaltenden Auswaschflüssigkeit aus dem Kreislauf einem Ultrafiltrationskreislauf zugeführt wird, wo Permeat entzogen und zur Ergänzung der Auswaschflüssigkeit in den Kreislauf zurückgeführt wird. Als Auswaschflüssigkeit wird das zum Spritzauftrag verwendete wäßrige Überzugsmittel in mit Wasser verdünnter Form eingesetzt; als im Ultrafiltrationskreislauf umlaufende Flüssigkeit wird das zum Spritzauftrag verwendete wäßrige Überzugsmittel gegebenenfalls in mit Wasser verdünnter Form eingesetzt und das Verfahren wird kontinuierlich durchgeführt.

Dirk Saarbach und Georg Schlumpf beschreiben in Oberfläche + JOT 1991, Heft 3, S. 18 bis 20, "Die Naßlackierung ohne Emissionen oder Sondermüll" die Lackierung von Büromöbeln mit einem Wasserlackrecycling, wobei auch ein kontinuierlicher Kreislauf beschrieben wird. Es wird erwähnt, daß die Teilsysteme "wasserverdünnbarer Einbrennlack", "Ultrafiltrationstechnik" und "Spritzanlage" aufeinander abgestimmt sein müssen. Auch wird die Zugabe von Additiven zum Recyclingprozeß beschrieben. Es wird jedoch kein Hinweis gegeben, wie ein Ablauf ohne Stabilitätsprobleme erreicht wird; darüberhinaus wird die Zusammensetzung des Originallackes durch die Zugabe der Additive verändert.

Für dieses Verfahren sind nur Lacke geeignet, die bei der Aufkonzentration durch Ultrafiltration von niedrigen auf hohe Konzentrationen nicht koagulieren oder andere Instabilitätserscheinungen zeigen, die die lacktechnischen Eigenschaften verändern.

Aufgabe der vorliegenden Erfindung ist daher die Bereitstellung eines Verfahrens zur Rückgewinnung des Oversprays von wäßrigen Überzugsmitteln, das eine Wiederverwertung des Oversprays im wäßrigen Überzugsmittel ermöglicht und durch das Stabilitätsprobleme vermieden werden, und daß den Einsatz hochqualitativer und daher meist empfindlicher wäßriger Überzugsmittel, wie beispielsweise wäßriger Autolacke, im Praxismaßstab ermöglicht.

Es hat sich gezeigt, daß diese Aufgabe gelöst werden kann durch ein Verfahren zur Rückgewinnung des Oversprays von wäßrigen Überzugsmitteln beim Spritzauftrag in Spritzkabinen, bei dem das Overspray in einer wäßrigen Auswaschflüssigkeit aufgefangen wird, die kontinuierlich in einem Kreislauf A in die Spritzkabine zurückgeführt wird, wobei ein Teil der Overspray enthaltenden Auswaschflüssigkeit aus dem Kreislauf A einem Ultrafiltrationskreislauf B zugeführt wird und wobei im Ultrafiltrationskreislauf B Permeat entzogen und zur Ergänzung der Auswaschflüssigkeit in den Kreislauf A zurückgeführt wird, bei dem als Auswaschflüssigkeit das in der Spritzkabine zum Spritzauftrag verwendete wäßrige Überzugsmittel in mit Wasser verdünnter Form eingesetzt wird, und als im Ultrafiltrationskreislauf B umlaufende Flüssigkeit, das in der Spritzkabine zum Spritzauftrag verwendete wäßrige Überzugsmittel, gegebenenfalls in mit Wasser verdünnter Form eingesetzt wird, und das Verfahren kontinuierlich durchgeführt wird, das dadurch gekennzeichnet ist, daß die Auswaschflüssigkeit im Kreislauf A einen annähernd konstanten Festkörpergehalt hat, der im Bereich von 4 bis 20 Gew.% liegt, und die im Ultrafiltrationskreislauf B umlaufende Flüssigkeit durch Entzug von Permeat bei einem annähernd konstanten Festkörpergehalt im Bereich von 15 Gew.% bis zu dem Festkörpergehalt, der sich bei der Spritzviskosität des wäßrigen Überzugsmittels ergibt, und höher als der Festkörpergehalt im Kreislauf A gehalten wird, und daß ein Teil der im Ultrafiltrationskreislauf B umlaufenden Flüssigkeit als wäßriges Überzugsmittel zum Spritzauftrag in der Spritzkabine oder zu dessen Aufbereitung verwendet wird.

Bei der im Ultrafiltrationskreislauf B umlaufenden Flüssigkeit handelt es sich entweder um das zum Spritzauftrag verwendete wäßrige Überzugsmittel im spritzfertigen Zustand, oder in einer mit Wasser verdünnten Form. Die im Ultrafiltrationskreislauf B umlaufende Flüssigkeit kann somit entweder direkt den Spritzaggregaten in der Spritzkabine zugeführt werden, oder nach einer Aufbereitung. Zur Aufbereitung kann gemäß einer bevorzugten Ausführungsform ein Teil der im Ultrafiltrationskreislauf B umlaufenden Flüssigkeit mit frischem Nachfüllkonzentrat des wäßrigen Überzugsmittels und gegebenenfalls Wasser und/oder gegebenenfalls anderen Überzugsmittel-Bestandteilen vermischt werden. Das Vermischen kann gegebenenfalls in einer eigenen Mischvorrichtung erfolgen. Gemäß einer weiteren bevorzugten Ausführungsform können das Nachfüllkonzentrat und gegebenenfalls Wasser und/oder gegebenenfalls andere Überzugsmittel-Bestandteile, gegebenenfalls über eine Mischvorrichtung, in die im Ultrafiltrationskreislauf B umlaufende Flüssigkeit dosiert werden, wodurch es möglich wird, die Spritzaggregate direkt mit der im Ultrafiltrationskreislauf B umlaufenden Flüssigkeit zu versorgen.

Beim erfindungsgemäßen Verfahren wird als Auswaschflüssigkeit im Kreislauf A im Gegensatz zum Stand der Technik kein Wasser eingesetzt, das gemäß dem Stand der Technik entweder voll entsalzt ist oder chemische Zusätze enthält, sondern der Kreislauf A wird erfindungsgemäß mit dem zum Spritzauftrag verwendeten wäßrigen Überzugsmittel in mit Wasser verdünnter Form gestartet und weitergeführt.

Beim erfindungsgemäßen Verfahren erfolgt ein kontinuierliches Recycling in mehreren Kreisläufen. Im Kreislauf A, welcher das Kabinenumlaufsystem darstellt, wird beim Anlauf des Verfahrens als Auswaschflüssigkeit das mit Wasser verdünnte wäßrige Überzugsmittel eingesetzt. Dieses nimmt Overspray auf und wird kontinuierlich dem Kreislauf B, einem Ultrafiltrationskreislauf, zugeführt. Gleichzeitig nimmt der Kreislauf A kontinuierlich wäßriges Permeat aus dem Kreislauf B auf. Durch das Verhältnis der Aufnahmemenge von Overspray zur Abgabemenge an den Kreislauf B kann der Festkörpergehalt im Kreislauf A annähernd konstant bei einem Wert von mindestens 4 Gew.%, vorzugsweise mindestens 7 Gew.%, bis zu 20 Gew.%, gehalten werden.

Im Ultrafiltrationskreislauf B, in dem ebenfalls das wäßrige Überzugsmittel verdünnt oder in Spritzkonsistenz zyklisiert wird, erfolgt eine Ultrafiltration, wobei einerseits wäßriges Permeat an den Kreislauf A zurückgeführt wird und andererseits das im Schoße des Ultrafiltrationskreislaufs B aufkonzentrierte Overspray zum Mischen mit einem Nachfüllkonzentrat für das wäßrige Überzugsmittel abgeführt wird. Im Kreislauf B wird der Festkörpergehalt des zyklisierten verdünnten wäßrigen Überzugsmittels bei einem konstanten Wert gehalten, der zwischen 15 Gew.% und dem Festkörpergehalt liegt, der sich bei Spritzviskosität ergibt, wobei die Konzentration im Kreislauf B immer höher ist als im Kreislauf A. Beim erfindungsgemäßen Verfahren werden also die beiden Kreisläufe A und B durch die aus A abgezogene Menge an Auswaschflüssigkeit und die aus dem Kreislauf B entnommenen Retentat- und Permeatmengen so aufeinander abgestimmt, daß die vorstehend erläuterte annnähernde Festkörperkonstanz in den beiden Kreisläufen erzielt wird.

Die vorstehend für den Kreislauf A und den Kreislauf B angegebenen Gewichtsprozente beziehen sich jeweils auf das Gesamtgewicht des im Kreislauf geführten wäßrigen Systems.
Das Nachfüllkonzentrat für das wäßrige Überzugsmittel wird mit Kreislaufflüssigkeit B auf Spritzviskosität gemischt und zur Spritzapplikation geleitet.
Durch die erfindungsgemäße Verfahrensführung, die Abstimmung der Kreisläufe A und B sowie den Einsatz von verdünntem wäßrigem Überzugsmittel als Berieselungsflüssigkeit in der Spritzkabine, werden Stabilitätsprobleme, wie sie sich beim Stand der Technik ergaben, vermieden. Das erfindungsgemäße Verfahren ermöglicht somit eine direkte Wiederverwendung des Oversprays wäßriger Überzugsmittel auch dann, wenn diese bei der Aufkonzentration durch Ultrafiltration zur Instabilität neigen oder ihre lacktechnischen Eigenschaften (z. B. das Viskositätsverhalten) verändern, wie dies insbesondere bei qualitativ hochwertigen Lacken für die Autoserienlackierung beobachtet wird.

Eine zusätzliche Menge an Leitungswasser oder vollentsalztem Wasser für die Berieselung der Spritzkabinenwände, wie sie im Stand der Technik notwendig war, die zu Stabilitätsproblemen des aufgefangenen Oversprays führte, wird durch das erfindungsgemäße Verfahren vermieden. Die Kabinenwände werden für eine optimale Aufnahme des Oversprays mit verdünntem wäßrigem Überzugsmittel berieselt. Lediglich im Verfahren, beispielsweise durch Verdunstung, entzogenes Wasser wird durch entsalztes Wasser ersetzt.

Der Vorteil des erfindungsgemäßen Verfahrens liegt in der Erhaltung der Zusammensetzung und des Gleichgewichtes in den Kreisläufen, wodurch gravierende Veränderungen in der Zusammensetzung des wäßrigen Überzugsmittels vermieden werden. Dadurch werden Störfaktoren, die zur Instabilität führen, verhindert und es ergibt sich die Möglichkeit eines nahezu 100%igen Recyclings von Overspray ohne großen Korrekturaufwand und mit geringem analytischem Aufwand.

Im Gegensatz zu den bekannten Verfahren ist es möglich, die Recycling-Kreisläufe durchzuführen, ohne diesen praktisch Additive zuzusetzen. Dadurch wird gewährleistet, daß keine nachträglich zugegebenen Additive die Eigenschaften des wäßrigen Überzugsmittel verändern und gegebenenfalls verschlechtern. Alle notwendigen Additive, wie z. B. Antischaummittel, Additive zur Vermeidung von Oberflächenstörungen, Verlaufsadditive können beispielsweise in das Lacknachfüll-Konzentrat eingearbeitet werden.

Die Einstellung der Gleichgewichte läßt sich einfach mit üblichen Apparaturen durchführen. Sie kann beispielsweise über das Verhältnis der abgegebenen Menge zur aufgenommenen Menge in den jeweiligen Kreisläufen, die Fläche und Leistungsfähigkeit der Ultrafiltrationsmembranen, die Konzentration des Nachfüllkonzentrats für wäßrige Überzugsmittel und den Durchsatz des wäßrigen Überzugsmittels in der Spritzkabine gesteuert werden. Solche Parameter können vom Fachmann leicht durch Versuch und Berechnung ermittelt werden.

Das erfindungsgemäße Verfahren kann mit üblichen Vorrichtungen durchgeführt werden, so daß es keiner speziellen Umstellung bereits vorhandener Einrichtungen bedarf.

Die erfindungsgemäß eingesetzten Spritzkabinen sind übliche Spritzkabinen. Sie können mit üblichem Zuluft- und Abluft-Kreislauf betrieben werden. Die einsetzbaren Spritzkabinen können beispielsweise mit mindestens einer Naßrieselwand oder mit einer Venturi-Auswaschung, wie sie insbesondere bei der Kraftfahrzeuglackierung üblich ist, ausgestattet sein. Im Falle von Naßrieselwänden können auch sämtliche Wandungen als Naßrieselwände ausgebildet sein. Sind Naßrieselwände vorhanden, so dient die Auswaschflüssigkeit als Berieselungsflüssigkeit. Die Auswaschflüssigkeit kann beispielsweise am Boden der Spritzkabine gesammelt und im Kreislauf zur erneuten Berieselung der Naßrieselwände oder zur erneuten Venturi-Auswaschung zurückgeführt werden. Derartige Spritzkabinen sind dem Fachmann geläufig. In ihnen erfolgt der Kabinenkreislauf, Kreislauf A.

Im Kreislauf B wird eine übliche Ultrafiltrationseinheit eingesetzt. Das wäßrige Überzugsmittel im Kreislauf B wird durch die Ultrafiltrationseinheit zyklisiert, beispielsweise über einen Behälter für das Ultrafiltrations-Retentat (das hier auch als Konzentrat bezeichnet wird), der beheizbar oder kühlbar sein kann. Aus diesem Behälter wird das Ultrafiltrations-Retentat zur Ultrafiltrationseinheit zurückgeführt. Der Ultrafiltrationseinheit kann ein Vorfilter zur Entfernung gröberer Verunreinigungen vorgeschaltet werden. Aus dem Kreislauf A abgezweigtes mit Overspray angereichertes wäßriges Überzugsmittel wird dem Kreislauf B zugeführt, beispielsweise in den Behälter für Ultrafiltrations-Konzentrat. Das wäßrige Permeat kann aus der Filtrationseinheit direkt in den Kreislauf A zurückgeführt werden, beispielsweise in den Boden der Spritzkabine, der wannenförmig ausgebildet sein kann. Das wäßrige Permeat kann ganz oder teilweise, gegebenenfalls durch ein Hyperfiltrationsaggregat, geführt werden. In dem Hyperfiltrationsaggregat erfolgt eine umgekehrte Osmose, durch die dem wäßrigen Permeat niedermolekulare Bestandteile entzogen werden. Diese können in den Kreislauf B, beispielsweise in den Behälter für das Ultrafiltrationskonzentrat, zurückgeführt werden. Das aus dem Hyperfiltrationsaggregat austretende Wasser wird wieder dem Kreislauf A, beispielsweise in den Boden der Spritzkabine, zurückgeführt.

Die Ultrafiltration, die umgekehrte Osmose bzw. die Hyperfiltration sind dem Fachmann bekannt. Sie können mit üblichen Einheiten durchgeführt werden. Diese Filterverfahren werden sowohl in den in der Beschreibungseinleitung genannten Patentanmeldungen und Patentschriften beschrieben, als auch beispielsweise von Wilhelm R. A. Auck und Herrmann A. Müller, in "Grundoperationen chemischer Verfahrenstechnik", Verlag Chemie, 1982, S. 153 - 155, von Robert Rautenbach und Rainer Albrecht, in "Grundlagen der chemischen Technik, Membrantrennverfahren, Ultrafiltration und Umkehrosmose", Otto Salle Verlag und Verlag Sauerländer, 1981, und von Thomas D. Brock, in "Membrane Filtration", Springer Verlag, 1983.

Für das erfindungsgemäße Verfahren werden bei der Ultrafiltration keine hohen Drücke benötigt. Als Mindestdruck ist ein Druck erforderlich, mit dem Wasser und niedrigmolekulare Substanz in meßbarer Geschwindigkeit durch die Membrane gepreßt werden. Derartige Drücke liegen beispielsweise bei 0,7 bis 11 bar, vorzugsweise in der Größenordnung von 5 bar.

Der Druck für die umgekehrte Osmose ist definitionsgemäß größer als der osmotische Druck. Es gibt keine scharfe Abgrenzung zwischen Ultrafiltration und umgekehrter Osmose oder Hyperfiltration. Für das erfindungsgemäße Verfahren wird unter umgekehrter Osmose oder Hyperfiltration beispielsweise die Filtration verstanden, bei der niedrigmolekulare Anteile des Permeats möglichst weitgehend vom Wasser getrennt werden.

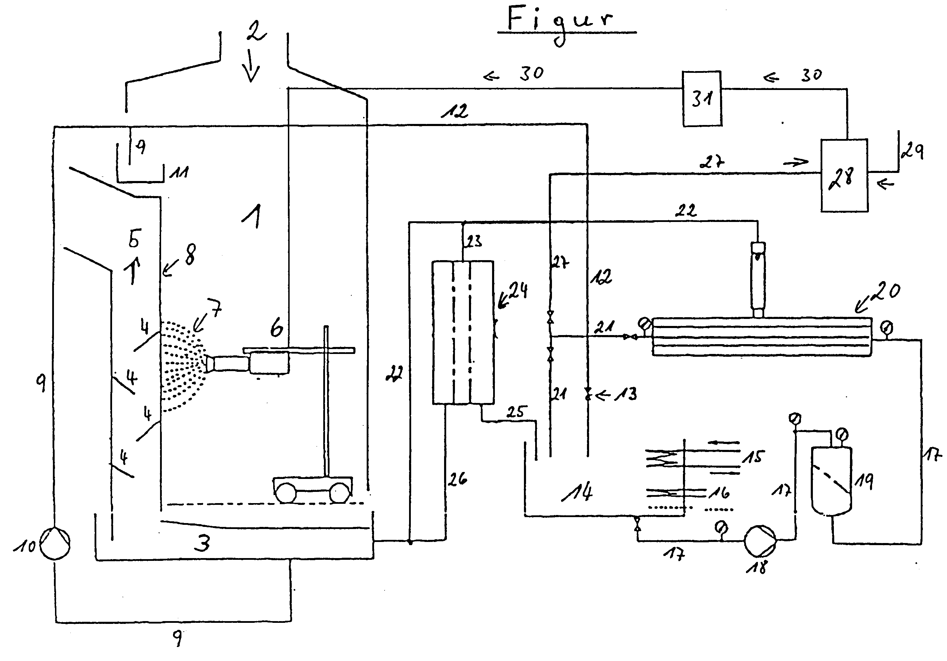

Durch den beim erfindungsgemäßen Verfahren möglichen Einsatz von Hyperfiltrationsaggregaten ergibt sich der zusätzliche Vorteil der Erfassung solcher wasserlöslicher Komponenten in das Recycling, die bei der Ultrafiltration teilweise oder völlig in das Permeat gelangen, wie wasserlösliche Kunstharze, z. B. Polyvinylalkohol, spezielle wasserlösliche Melaminharze, z. B. Cymel 327, der wasserlösliche Anteil organischer Lösemittel oder niedrigmolekulare Verbindungen, wie sie beispielsweise in dem Bericht von Dietrich Saatweber, in "Untersuchungen zum Einfluß der Ultrafiltration auf die Eigenschaften von Elektrotauchlacken", VII, FATIPEC KONGRESS, Kongress-Buch S. 467-474 beschrieben werden. Eventuelle Änderungen in den Massenverhältnissen der nicht ins Permeat gelangenden Komponenten und der ins Permeat gelangenden Komponenten, z. B. bei unbeabsichtigtem Verlust von Ultrafiltrat, können gegebenenfalls durch geeignete Rezeptur des Nachfüllkonzentrats für die wäßrigen Überzugsmittel ausgeglichen werden. Gegebenenfalls können aber auch dem Permeat, wie vorstehend beschrieben, die Komponenten durch umgekehrte Osmose bzw. Hyperfiltration entzogen werden und direkt in den Kreislauf B zurückfließen. Während des Verfahrens eventuell eingeschleppte Elektrolyte werden gegebenenfalls mit Hilfe von Ionenaustauschern aus dem Permeat entfernt, wobei geläufige, dem Fachmann bekannte Methoden angewendet werden können.
Die beigefügte Figur stellt ein Fließschema dar, welches das erfindungsgemäße Verfahren bzw. die erfindungsgemäß einsetzbare Vorrichtung anhand eines Beispiels erläutert, wobei dieses Beispiel eine bevorzugte Ausführungsform des erfindungsgemäßen Verfahrens darstellt. In der Figur wird eine übliche Spritzkabine 1 dargestellt, die über einen Zuluftkanal 2 von oben her mit Luft bespeist werden kann, welche am Boden 3 der Spritzkabine in einen mit Prallwänden 4 versehenen Abluftkanal 5 eingeführt werden kann.

Das beim Spritzen mit dem Spritzaggregat 6 anfallende Overspray 7 (Spritznebel) wird an der Naßrieselwand 8 aufgefangen. Die an der Naßrieselwand 8 nach unten abfließende Berieselungsflüssigkeit wird im wannenförmig ausgebildeten Boden 3 der Spritzkabine aufgefangen und von dort über die Leitung 9, mittels einer Pumpe 10 und einem Überlauf 11 dem oberen Ende der Naßrieselwand 8 wieder zugeführt.

Der Kabinenkreislauf, Kreislauf A, wird somit durch die Naßrieselwand 8, den Boden 3 der Spritzkabine, die Leitung 9 mit Pumpe 10 und den Überlauf 11 gebildet. Als Berieselungsflüssigkeit dient das in der Spritzkabine im Spritzaggregat 6 verwendete wäßrige Überzugsmittel, das mit Wasser verdünnt ist und bei einem Festkörpergehalt, der bei einem annähernd konstanten Wert im Bereich von 4 bis 20 Gew.% liegt, gehalten wird.

Von der in der Figur dargestellten Leitung 9 zweigt eine Leitung 12 ab, die über eine Steuerungseinrichtung 13 zu einem Behälter 14 führt, der zur Aufnahme von Ultrafiltrations-Retentat bestimmt ist. Der Behälter 14 kann mit Kühleinrichtungen 15 und Heizeinrichtungen 16 versehen sein, um die gewünschten Arbeitstemperaturen einzustellen. Die aus der Leitung 12 mit Overspray angereicherte Berieselungsflüssigkeit wird mit der im Behälter 14 enthaltenen Kreislaufflüssigkeit vermischt.

Aus dem Behälter 14 wird das Ultrafiltrations-Retentat zusammen mit der aus dem Kreislauf A eingeführten Flüssigkeit über die Leitung 17, mittels einer Pumpe 18 und über ein gegebenenfalls zuschaltbares Vorfilter 19 einer Ultrafiltrationseinheit 20 zugeführt. In der Ultrafiltrationseinheit 20 wird laufend Permeat entzogen. Das Retentat wird über die Leitung 21 zurück in den Behälter 14 geführt.

Im allgemeinen beträgt die Permeatausbeute bei der Ultrafiltration beispielsweise weniger als 1 % des durch die Filter fließenden Volumens, so daß sich das Retentat in seiner Zusammensetzung praktisch nicht von der in die Anlage einfließenden Kreislaufflüssigkeit unterscheidet, insbesondere dann, wenn das Volumen des Behälters 14 sehr groß ist im Vergleich zum Durchflußvolumen der Ultrafiltrationseinheit. Durch Ausnutzung dieses Effekts erlaubt das erfindungsgemäße Verfahren die Aufkonzentration des Oversprays aus Kreislauf A bei praktisch gleichbleibender Zusammensetzung und gleichem Festkörpergehalt des Kreislaufs B.

Erfindungsgemäß wird ein Ultrafiltrationskreislauf, Kreislauf B, durch den Behälter 14, die Leitung 17 mit Pumpe 18 und gegebenenfalls zuschaltbarem Vorfilter 19, die Ultrafiltrationseinheit 20 und die Leitung 21 gebildet. Beim erfindungsgemäßen Verfahren werden der Kreislauf B in Kombination mit der Steuerung 13, die die Zufuhr von mit Overspray angereicherter Berieselungsflüssigkeit aus dem Kreislauf A regelt, so gesteuert, daß die umlaufende Flüssigkeit im Kreislauf B bei einem Festkörpergehalt gehalten wird, der bei einem annähernd konstanten Wert im Bereich von 15 Gew.% bis zu dem Festkörpergehalt liegt, der sich bei Spritzviskosität des Überzugsmittels ergibt.

Aus der Ultrafiltrationseinheit 20 erhaltenes Permeat wird über die Leitung 22 abgezogen und über den Boden 3 der Spritzkabine 1 in den Kreislauf A zurückgeführt.

Von der Leitung 22 kann zuschaltbar die Leitung 23 abzweigen, die zu einem Hyperfiltrationsaggregat 24 führt, in dem gelöste oder niedermolekulare Anteile durch Umkehrosmose aus dem wäßrigen Permeat abgetrennt und über die Leitung 25 in den Behälter 14 zurückgeführt werden können. Das von gelösten oder niedermolekularen Bestandteilen befreite Permeat kann aus dem Hyperfiltrationsaggregat 24 über die Leitung 26 zum Boden 3 der Spritzkabine 1 und damit in den Kreislauf A zurückgeführt werden.

Von der Leitung 21, die Ultrafiltrations-Retentat aus der Ultrafiltrationseinheit 20 in den Behälter 14 zurückführt, zweigt eine zuschaltbare Leitung 27 ab, die einen Teil des bei der Ultrafiltration erhaltenen Konzentrats zu einer Nachfüllvorrichtung 28 führt. Der Nachfüllvorrichtung wird Nachfüllkonzentrat durch die Leitung 29 zugeführt, das durch Vermischen mit dem Ultrafiltrations-Retentat zu dem wäßrigen Überzugsmittel verdünnt wird, das im Spritzaggregat 6 in der Spritzkabine 1 zur Spritzapplikation verwendet werden kann. Die Nachfüllvorrichtung 28 kann somit mittels einer Leitung 30, gegebenenfalls über einen Vorratsbehälter 31, mit dem Spritzaggregat 6 verbunden sein. In der Nachfüllvorrichtung 28 können auch weitere Bestandteile zugemischt werden, die während der Durchführung des Verfahrens den Kreisläufen A oder B entzogen wurden, wie beispielsweise Wasser oder flüchtige Anteile.

Das erfindungsgemäße Verfahren kann mit wasserverdünnbaren Überzugsmitteln durchgeführt werden, wie sie dem Fachmann geläufig und im Handel erhältlich sind. Geeignet sind beispielsweise wasserverdünnbare Lacke, wie sie beispielsweise für die Auto- bzw. Kraftfahrzeugserienlackierung verwendet werden. Geeignet sind jedoch auch wasserverdünnbare Überzugsmittel mit höherem Festkörpergehalt, wie wasserverdünnbare Füller, wie sie beispielsweise ebenfalls in der Autoserienlackierung eingesetzt werden.

Das erfindungsgemäße Verfahren wird bevorzugt an wäßrigen Überzugsmitteln durchgeführt, die einen Festkörpergehalt von 15 bis 80 Gew.% aufweisen; bevorzugt wird dabei so gearbeitet, daß dieser Festkörpergehalt gleich oder größer ist als der Festkörpergehalt der im Ultrafiltrationskreislauf B umlaufenden Flüssigkeit.

Die Bestimmung der Festkörpergehalte von wäßrigem Überzugsmittel sowie in den einzelnen Kreisläufen kann beispielsweise nach DIN 53216 durchgeführt werden. Dabei ist es bevorzugt, nach der Einwaage der zu bestimmenden Probe auf einer Metallschale mit flachem Boden zuerst etwa eine halbe Stunde bei etwa 95 °C vorzuwärmen. Dadurch wird ein Teil des Wassers verdampft und kann dann nicht mehr zu falschen Ergebnissen durch Verspritzen führen.

Die wasserverdünnbaren Überzugsmittel, beispielsweise wasserverdünnbaren Lacke und Füller, können gegebenenfalls Pigmente und/oder Füllstoffe enthalten, sie können jedoch auch als Klarlacke formuliert sein. Sie können organische Lösemittel enthalten oder frei von organischen Lösemitteln sein.

Die für das erfindungsgemäße Verfahren einsetzbaren wasserverdünnbaren Überzugsmittel können, wie erwähnt, transparent oder pigmentiert sein. Sie können gegebenenfalls Füllstoffe, Additive, Koaleszenzmittel, flüchtige organische Flüssigkeiten und sonstige übliche Lackrohstoffe enthalten. Sie können physikalisch oder chemisch trocknend sein. Es kann sich um selbstvernetzende oder fremdvernetzende Systeme, beispielsweise für Einbrennlacke, handeln.

Wasserverdünnbare Lacke, die beim erfindungsgemäßen Verfahren eingesetzt werden können, sind z. B. wäßrige Dispersionen. Es kann sich dabei um Systeme mit feiner Verteilung von Polymeren bzw. Kunstharzen im Wasser auf Basis von Homopolymeren oder Copolymeren von Styrol, Vinylchlorid, Vinylacetat, Maleinsäureanhydrid, Maleinsäureester, Maleinsäurehalbester, Vinylpropionat, (Meth)Acrylsäure und deren Ester, Amide und Nitrile handeln. Beispiele für derartige wäßrige Überzugsmittel findet man in dem Lehrbuch der Lacke und Beschichtungen, Herausgeber: Dr. Hans Kittel, Bd. I, Teil 3, Verlag W. A. Colomb in der H. Heenemann GmbH, 1974, Seiten 920 bis 1001 und in Lackkunstharze von Hans Wagner und Hans Friedrich Sarx, Carl Hanser Verlag, München, 1971, Seiten 207 bis 242, sowie in A Manual of Resins for Surface Coatings, SITA Technology, London, 1987, Volume II, Seiten 249 bis 296.

Weitere Beispiele sind wasserverdünnbare Lacke, die Emulsionen von Polymeren bzw. Kunststoffen darstellen. Sie können beispielsweise in Lösemitteln gelöste oder lösemittelfreie Bindemittel, gegebenenfalls mit Vernetzungsmitteln, emulgiert in Wasser, enthalten. Emulsionen mit besonders feiner Verteilung der Bindemitteltröpfchen werden als Mikroemulsionen bezeichnet. Die große Gruppe der wasserverdünnbaren Lacke, die mit sogenannten wasserlöslichen Polymeren bzw. Kunstharzen hergestellt werden und als weitere Beispiele für das erfindungsgemäße Verfahren verwendet werden können, enthalten Bindemittel, welche saure oder basische Gruppen tragen, z. B. Carbonsäuregruppen, Carbonsäureanhydridgruppen, Sulfonsäuregruppen, primäre, sekundäre, tertiäre Aminogruppen, Sulfoniumgruppen, Phosphoniumgruppen. Durch Neutralisation oder Teilneutralisation der Gruppen mit basischen Verbindungen, z. B. mit Amin, Alkanolamin, Ammoniak, Natriumhydroxid oder Kaliumhydroxid, oder mit sauren Verbindungen, z. B. Ameisensäure, Essigsäure, Milchsäure, Alkylphosphorsäure, Kohlensäure, werden die Polymeren bzw. Kunstharze in eine wasserverdünnbare Form gebracht. Die Bindemittelbasis besteht z. B. aus einem oder mehreren Bindemitteln der Gruppe der Polyurethanharze, Polyesterharze, Poly(meth)acrylatharze, Epoxidharze, Epoxidharzester, fette Öle (z. B. Leinöl), synthetische Öle (z. B. Polybutadienöl).

Beispiele für sogenannte wasserlösliche Lacke sind in Lehrbuch der Lacke und Beschichtungen, Herausgeber: Dr. Hans Kittel, Bd. I, Teil 3, Verlag W. A. Colomb in der H. Heenemann GmbH, 1974, Seiten 879-919 und A Manual of Resins for Surface Coatings, SITA Technology London, 1987, Volume III, Seiten 169-280, sowie EP-A-0 032 554, EP-A-0 270 795 und EP-A-0 309 901 zu finden.

Mischungen von wäßrigen Dispersionen mit sogenannten wasserlöslichen Polymeren bzw. Kunstharzen, die als Hybrid-Systeme bekannt sind, eignen sich ebenfalls für das erfindungsgemäße Verfahren.

Als Vernetzungsmittel für die wäßrigen Überzugsmittel kommen beispielsweise Harnstoffharze, Triazinharze (wie Melaminharze und Benzoguanaminharze), Phenolharze, blockierte Polyisocyanate (wie blockierte Diisocyanate, Triisocyanate, Isocyanurate, Diurete, Prepolymere von Isocyanaten) und Mischungen von verschiedenen Vernetzungsmitteln in Frage.

Das erfindungsgemäße Verfahren eignet sich bevorzugt für wasserverdünnbare Lacke, die z. B. in DE-A-36 28 124, DE-A-36 28 125, DE-A-37 39 332, DE-A-38 05 629, DE-A-38 38 179, EP-A-0 038 127, EP-A-0 089 497, EP-A-0 123 939, EP-A-0 158 099, EP-A-0 226 171, EP-A-0 238 037, EP-A-0 234 361, EP-A-0 298 148, EP-A-0 287 144, EP-A-0 300 612, EP-A-0 315 702, EP-A-0 346 886, EP-A-0 399 427, US-A-4,822,685, US-A-4,794,147 und WO 87/05305 beschrieben und in Form der Spritzapplikation (manuell, automatisch oder elektrostatisch) für die Autoserienlackierung verwendet werden, und besonders bevorzugt für wasserverdünnbare Füller (Hydrofüller), die z.B. in EP-A-0 015 035, EP-A-0 269 828, EP-A-0 272 524, WO 89/10387 und Wasser-Klarlacke in der Autoserienlackierung, die z. B. in DE-A-0 266 152 beschrieben werden.

Das erfindungsgemäße Verfahren läßt sich bevorzugt auch auf wasserverdünnbare Steinschlagschutzlacke anwenden, wie sie beispielsweise in DE-A-38 05 629 beschrieben werden. Solche Steinschlagschutzlacke können direkt auf Metallsubstrate oder auf mit üblichen Grundierungsmitteln, z. B. Elektrotauchlack, vorgrundierte Metallsubstrate appliziert und gegebenenfalls mit Füller überlackiert werden. Sie verbessern die Steinschlagfestigkeit von Mehrschicht-Lackierungen.

Durch die vorliegende Erfindung wird ein Verfahren bereitgestellt, das die problemlose praktische Wiederverwertung von Overspray ermöglicht, das bei der Spritzapplikation wäßriger Überzugsmittel anfällt. Das erfindungsgemäße Verfahren ist besonders geeignet zur Anwendung auf die manuelle, automatische oder elektrostatische Spritzapplikation, wie sie insbesondere bei der Autoserienlackierung durchgeführt wird. Es kann daher beispielsweise auf wasserverdünnbare Lacke für die Autoserienlackierung angewendet werden, wie pigmenthaltige Unilacke und effektpigmenthaltige Lacke, z. B. Metalliclacke, und bevorzugt wird es auf wasserverdünnbare Füller (Hydrofüller) sowie auf wasserverdünnbare Klarlacke für die Autoserienlackierung angewendet. Es ermöglicht eine umweltschonende praktisch 100%ige Wiederverwendung von Overspray. Dabei ist es überraschend, daß stabile wiederverwendbare Lackmaterialien erhalten werden, ohne daß es notwendig ist nachträglich zusätzliche Additive zu verwenden.

Das folgende Beispiel erläutert die Erfindung.

### Beispiel

In einer Vorrichtung, wie sie als bevorzugte Ausführungsform anhand der beigefügten Figur beschrieben wurde, wird in einer Spritzkabine 1 mit Hydrofüller (wäßrigem Füller) mit einem Feststoffgehalt von 50 Gew.% gespritzt. Die Naßberieselung der Kabine und damit der Kabinenumlauf A wird mit dem gleichen Hydrofüller betrieben, der mit entsalztem Wasser auf einen Feststoffgehalt von 10 Gew.% verdünnt wurde. Der Kabinenumlauf nimmt pro Arbeitstag etwa 1 % seines Volumens an Overspray des verspritzten Hydrofüllers auf. Dies sind etwa 20 % des Volumens der verspritzten Hydrofüllermenge.

Der Ultrafiltrationskreislauf B wird mit auf 40 Gew.% verdünntem Hydrofüller befüllt. Sein Volumen beträgt etwa 25 % des Volumens vom Kreislauf A.

Pro Arbeitstag werden etwa 6,5 % des Volumens von Kreislauf A kontinuierlich nach Kreislauf B überführt. Die Flüssigkeit aus Kreislauf B wird kontinuierlich über eine für das Lackmaterial geeignete Ultrafiltrationsanlage 20 geführt. Pro Arbeitstag werden dem Kreislauf B etwa 20 % seines Volumens an Ultrafiltrat entzogen und dem Kreislauf A über die Leitung 22 zugeführt.

In der Nachfüllvorrichtung 28 werden kontinuierlich 3 Teile eines etwa 53%igen Hydrofüller-Nachfüllkonzentrats mit 1 Teil des Materials aus dem Kreislauf B gemischt und über ein Filter dem Spritzaggregat 6 in der Spritzkabine 1 direkt oder über einen Vorratsbehälter 31 zugeführt.

Das Hydrofüller-Nachfüllkonzentrat ist so eingestellt, daß seine Abmischung mit dem Material aus Kreislauf B den spritzfertigen Hydrofüller ergibt. Das Nachfüllkonzentrat enthält hierzu auch zusätzlich die flüchtigen organischen Bestandteile, die im Kreislauf A bei der Trennung von Kabinenluft und Umlaufflüssigkeit verlorengehen können. Die zugesetzten Mengen ergeben sich aus der Analyse des in Kreislauf B erhaltenen Retentats.

Wasserverluste, die beispielsweise durch Verdunstung auftreten, können durch direkte Zugabe von entsalztem Wasser in dem Kreislauf A ausgeglichen werden.

Die Festkörperbestimmung im vorstehenden Beispiel erfolgte nach DIN 53216, Zeit/Temperatur-Kombination: eine halbe Stunde bei 95 °C plus eine Stunde bei 125 °C.

## Patentansprüche

1. Verfahren zur Rückgewinnung des Oversprays von wäßrigen Überzugsmitteln beim Spritzauftrag in Spritzkabinen, bei dem das Overspray in einer wäßrigen Auswaschflüssigkeit aufgefangen wird, die kontinuierlich in einem Kreislauf (A) in die Spritzkabine zurückgeführt wird, wobei ein Teil der Overspray enthaltenden Auswaschflüssigkeit aus dem Kreislauf (A) einem Ultrafiltrationskreislauf (B) zugeführt wird, und wobei im Ultrafiltrationskreislauf (B) Permeat entzogen und zur Ergänzung der Auswaschflüssigkeit in den Kreislauf (A) zurückgeführt wird, wobei
als Auswaschflüssigkeit das in der Spritzkabine zum Spritzauftrag verwendete wäßrige Überzugsmittel in mit Wasser verdünnter Form eingesetzt wird, als im Ultrafiltrationskreislauf (B) umlaufende Flüssigkeit das in der Spritzkabine zum Spritzauftrag verwendete wäßrige Überzugsmittel gegebenenfalls in mit Wasser verdünnter Form eingesetzt wird, und das Verfahren kontinuierlich durchgeführt wird,
dadurch gekennzeichnet, daß die Auswaschflüssigkeit im Kreislauf (A) einen annähernd konstanten Festkörpergehalt hat, der im Bereich von 4 - 20 Gew.-% liegt, und die im Ultrafiltrationskreislauf (B) umlaufende Flüssigkeit durch Entzug von Permeat bei einem annähernd konstanten Festkörpergehalt im Bereich von 15 Gew.-% bis zu dem Festkörpergehalt, der sich bei Spritzviskosität des wäßrigen Überzugsmittels ergibt und höher als der Festkörpergehalt im Kreislauf (A) ist, gehalten wird und daß ein Teil der im Ultrafiltrationskreislauf (B) umlaufenden Flüssigkeit als wäßriges Überzugsmittel zum Spritzauftrag in der Spritzkabine oder zu dessen Aufbereitung verwendet wird.

2. Verfahren nach Anspruch 1, dadurch gekennzeichnet, daß das Flüssigkeitsvolumen im Kreislauf (A) und im Kreislauf (B) jeweils konstant gehalten wird.

3. Verfahren nach Anspruch 1 oder 2, dadurch gekennzeichnet, daß mit einem wäßrigen Überzugsmittel gearbeitet wird, das einen Festkörpergehalt von 15 bis 80 Gew.-% aufweist, wobei dieser Festkörpergehalt jeweils gleich oder größer ist als der Festkörpergehalt der im Ultrafiltrationskreislauf (B) umlaufenden Flüssigkeit.

4. Verfahren nach Anspruch 1, 2 oder 3, dadurch gekennzeichnet, daß ein Teil der im Ultrafiltrationskreislauf (B) umlaufenden Flüssigkeit mit frischem Nachfüllkonzentrat des wäßrigen Überzugsmittels und gegebenenfalls Wasser und/oder anderen Überzugsmittelbestandteilen gegebenenfalls unter Zuhilfenahme von Mischvorrichtungen unter Bildung des wäßrigen Überzugsmittels vermischt wird, das zum Spritzauftrag in die Spritzkabine geführt wird.

5. Verfahren nach Anspruch 1, 2 oder 3, dadurch gekennzeichnet, daß im Ultrafiltrationskreislauf (B) mit dem spritzfertigen Überzugsmittel als umlaufende Flüssigkeit gearbeitet wird.

6. Verfahren nach Anspruch 5, dadurch gekennzeichnet, daß dem Ultrafiltrationskreislauf (B) das Nachfüllkonzentrat des wäßrigen Überzugsmittels und gegebenenfalls Wasser und/oder andere Überzugsmittelbestandteile gegebenenfalls unter Zuhilfenahme von Mischvorrichtungen zudosiert werden und das für die Spritzapplikation benötigte Überzugsmittel aus dem Ultrafiltrationskreislauf (B) gezogen wird.

7. Verfahren nach einem der vorhergehenden Ansprüche, dadurch gekennzeichnet, daß es mit wäßrigen pigmentierten oder transparenten Lacken durchgeführt wird.

8. Verfahren nach einem der Ansprüche 1 bis 6, dadurch gekennzeichnet, daß es mit wäßrigen Füllern durchgeführt wird.

9. Verfahren nach einem der vorhergehenden Ansprüche, dadurch gekennzeichnet, daß es mit wäßrigen Überzugsmitteln durchgeführt wird, die für die Autoserienlackierung bzw. Kraftfahrzeugserienlackierung verwendet werden.

## Claims

1. A process for recovering the overspray from water coatings during spraycoating in spray booths, in which the overspray is collected in an aqueous wash liquid which is recycled continuously in a circuit (A) to the spray booth, wherein a part of the wash liquid contained in the overspray is returned from the circuit (A) to an ultrafiltration circuit (B), and wherein permeate is removed in the ultrafiltration circuit (B) and recycled to circuit (A) to make up the wash liquid, wherein the wash liquid used is the water coating used in the spray booth for spraycoating in the form thinned in water, the liquid circulating in the ultrafiltration circuit (B) is the water coating used in the spray booth for spraycoating optionally in the form thinned with water, and the process is carried out continuously, characterised in that the wash liquid in circuit (A) has an approximately constant solids content of from 4 to 20 wt.% and, by removing permeate, the liquid circulating in the ultrafiltration circuit (B) is kept at an approximately constant solids content from 15 wt.% to the solids content prevailing at the spray viscosity of the water coating and is higher than the solids content in circuit (A), and in that a part of the liquid circulating in the ultrafiltration circuit (B) is used as water coating for spraycoating in the spray booth or for the treatment thereof.

2. A process according to claim 1, characterised in that the volume of liquid in the circuit (A) and in the circuit (B) is kept constant in each case.

3. A process according to claim 1 or 2, characterised in that operations are carried out with a water coating which has a solids content of 15 to 80 wt.%, wherein said solids content is in each case the same as or greater than the solids content of the liquid circulating in the ultrafiltration circuit (B).

4. A process according to claim 1, 2 or 3, characterised in that a part of the liquid circulating in the ultrafiltration circuit (B) is mixed with fresh make-up concentrate of the water coating and optionally water and/or other coating constituents optionally with the assistance of mixing devices to form the water coating which is fed to the spray booth for spraycoating.

5. A process according to claim 1, 2, or 3, characterised in that operations are carried out in the ultrafiltration circuit (B) with the ready-to-spray coating as circulating liquid.

6. A process according to claim 5, characterised in that the make-up concentrate of the water coating and optionally water and/or other coating constituents are metered into the ultrafiltration circuit (B) optionally with the assistance of mixing devices, and the coating required for spray application is drawn off from the ultrafiltration circuit (B).

7. A process according to one of the preceding claims, characterised in that it is carried out with pigmented or transparent water lacquers.

8. A process according to one or more of claims 1 to 6, characterised in that it is carried out with water surfacers.

9. A process according to one of the preceding claims, characterised in that it is carried out with water coatings which are used for automotive series painting or motor vehicle series painting.

## Revendications

1. Procédé de récupération du débordement du jet de pulvérisation de compositions aqueuses de revêtement lors de l'application au pistolet dans des cabines de peinture, suivant lequel le débordement du jet de pulvérisation est recueilli dans un liquide aqueux de lavage qui est renvoyé en continu dans un circuit (A) situé à l'intérieur de la cabine de peinture, une partie du liquide de lavage, qui contient le débordement du jet de pulvérisation, étant dirigée du circuit (A) dans un circuit (B) d'ultrafiltration et du perméat étant extrait du circuit d'ultrafiltration (B) et renvoyé dans le circuit (A) pour compléter le liquide de lavage, le liquide de lavage qui est utilisé étant la composition aqueuse de revêtement qui est utilisée sous forme diluée à l'eau dans la cabine de peinture pour l'application au pistolet, le liquide qui passe dans le circuit d'ultrafiltration (B) étant la composition aqueuse de revêtement, éventuellement sous forme diluée à l'eau, qui est utilisée dans la cabine de peinture pour l'application au pistolet et le procédé étant exécuté en continu, caractérisé en ce que le liquide de lavage du circuit (A) a une teneur en solides approximativement constante qui est comprise dans la plage de 4-20% en poids et le liquide passant dans le circuit d'ultrafiltration (B) étant maintenu par prélèvement de perméat à une teneur à peu près constante en solides qui est dans la plage de 15% en poids à la teneur en solides qui est donnée par la viscosité de pulvérisation de la composition aqueuse de revêtement et qui est supérieure à la teneur en solides du circuit (A) et en ce qu'une partie du liquide passant dans le circuit d'ultrafiltration (B) est utilisée en composition aqueuse de revêtement pour l'application au pistolet dans la cabine de peinture ou pour sa préparation.

2. Procédé selon la revendication 1, caractérisé en ce que chacun des volumes de liquide du circuit (A) et du circuit (B) est maintenu à une valeur constante.

3. Procédé selon la revendication 1 ou 2, caractérisé en ce qu'on opère avec une composition aqueuse de revêtement qui a une teneur en solides de 15 à 80% en poids, cette teneur en solides étant dans chaque cas égale ou supérieure à la teneur en solides du liquide passant dans le circuit d'ultrafiltration (B).

4. Procédé selon la revendication 1, 2 ou 3, caractérisé en ce qu'une partie du liquide passant dans le circuit d'ultrafiltration (B) est mélangée avec un concentrat frais de réapprovisionnement en la composition aqueuse de revêtement et éventuellement avec de l'eau et/ou d'autres composants de la composition de revêtement, éventullement à l'aide de dispositifs mélangeurs, de manière à former la composition aqueuse de revêtement qui est dirigée dans la cabine de peinture pour l'application au pistolet.

5. Procédé selon la revendication 1, 2 ou 3, caractérisé en ce qu'on opère dans le circuit d'ultrafiltration (B) avec la composition de revêtement qui est prête à être pulvérisée et qui constitue le liquide en circulation.

6. Procédé selon la revendication 5, caractérisé en ce que le concentrat de réapprovisionnement en la composition aqueuse de revêtement et éventuellement de l'eau et/ou d'autres composants de la composition de revêtement sont ajoutés en quantités dosées dans le circuit d'ultrafiltration (B) éventuellement à l'aide de dispositifs mélangeurs et la composition de revêtement nécessaire à l'application au pistolet est soutirée du circuit d'ultrafiltration (B).

7. Procédé selon l'une des revendications précédentes, caractérisé en ce qu'il est exécuté à l'aide de vernis aqueux pigmentés ou transparents.

8. Procédé selon l'une des revendications 1 à 6, caractérisé en ce qu'il est exécuté avec des charges aqueuses.

9. Procédé selon l'une des revendications précédentes, caractérisé en ce qu'il est exécuté avec des compositions aqueuses de revêtement qui sont utilisées pour la peinture en série de voitures automobiles et la peinture en série de véhicules à moteur.
